# EUROPEAN PATENT APPLICATION

(11) **EP 2 237 148 A1**
(43) Date of publication of application: **06.10.2010**
(21) Application number: 09156954.1
(22) Date of filing: 31.03.2009
(51) Int. Cl.: G06F 9/44

(54) **Widget server, method of operating a widget server and method and device for providing a widget recommendation**

(71) Applicant: Sony Corporation, Tokyo (JP)
(72) Inventor: Huecas Belandrino, Sara, 70327 Stuttgart (DE)
(74) Representative: Keck, Stephan

(57) **Abstract**

The present invention relates to a method of operating a widget server (2), comprising the steps of receiving information of a widget (21) selected for recommendation together with an identification number identifying a user, to which the selected widget (21) is to be recommended, storing the information of the selected widget (21) together with the identification number, checking the identification number of each user accessing the widget server (2), and transmitting a list (20) of widgets (21, 22, 23, 24) to the user device (16) of said user accessing the widget server (2) if the stored identification number corresponds to the identification number of the user accessing the widget server (2), wherein the transmitted list (20) of widgets (21, 22, 23, 24) is adapted in accordance with the stored recommendations.

The present invention further relates to a widget server (2) and to a device (6) and method for providing a widget recommendation.

## Description

The present invention relates to the field of recommending widgets between users. More specifically, the present invention relates to a widget server, a method of operating a widget server and a device and a method for providing a widget recommendation.

The implementation of widgets or applets is gaining importance in recent times. Specifically, in the field of television widgets the development is still in a very early stage. However, as the number of available widgets is growing, filtering or discrimination systems are becoming more important for the widget user.

Document US 2006/0271961 A1 discloses a system and method for delivering tags related to a content item to different users. The content items are for example a television content, an audio content, a video content, web pages or the like. In order to select the users to which the tags are to be transmitted, a user creates a user profile including one or more buddies, wherein the profile is centrally stored. The other users to which then the tag is transmitted, are selected based on the stored user profile.

The disadvantage of this system is that the user has to create his user profile and have it centrally stored. This is time consuming for the user and on the other hand might result problems regarding privacy or security.

Document WO 2008/047192 A2 proposes a system and method for managing and using electronic widgets. This document aims at possibilities that a user can manage on his own device his widgets. This document further allows a user to recommend a widget to a second user, whereby then the second user will receive a message including widget access information.

This document thus proposes that via an external message application recommendations can be exchanged. This makes the recommendation uncomfortable and time-consuming.

It is therefore the objective problem of the present invention to improve the prior art. Specifically, it is an object of the present invention to reduce the problems posed by the prior art.

More specifically, it is an object of the present invention to provide the possibility of widget recommendation, which is less resource-consuming and more comfortable for the user.

This object is solved by the features of the independent claims.

Further embodiments and advantages are set out in the dependent claims.

Further features, advantages and objects of the present invention will become evident by means of the figures of the enclosed drawings as well as by the following detailed explanation of illustrative-only embodiments of the present invention.
Fig. 1 shows a system comprising a widget server and a device for providing a widget recommendation according to the present invention,
fig. 2 shows a display with a widget recommendation option according to the present invention,
fig. 3 shows a display with a widget recommendation window according to the present invention,
fig. 4 and 5 show two embodiments of displaying widget lists adapted in accordance with recommendations according to the present invention,
fig. 6 shows a flow chart showing the steps according to the method of providing a widget recommendation according to the present invention, and
fig. 7 shows a flow chart showing the steps according to the method of operating a widget server according to the present invention.

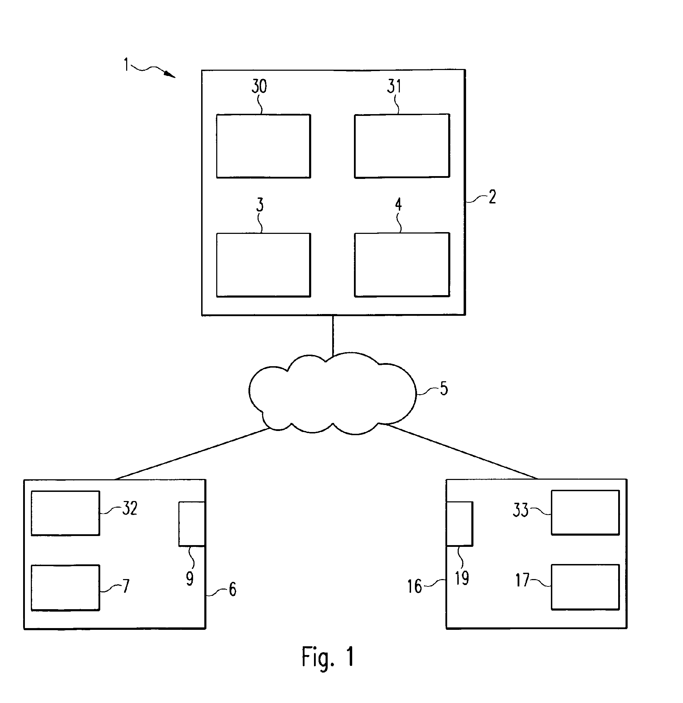

Fig. 1 shows a system 1 according to the present invention. The system 1 comprises a widget server 2 according to the present invention. The widget server 2 via a network 5 is connected to at least two devices 6, 16, which in the following will be referred to as first device 6 and second device 16.

A widget according to the present application refers to a user interface element and/or an application or applet, that provides and convey information which allow the user to run and display the applets on his user interface. Non-limiting examples are advertisements, time information, weather information, icons or the like.

At least one of the first and second devices 6, 16 is adapted to provide a widget recommendation. Correspondingly, the other device 6, 16 is adapted to receive the widget recommendation.

Both devices 6, 16 in any case comprise a widget client 7, 17 installed within the respective device 6, 16. The widget client 7, 17 allows to access the widget server 2 via the network 5. The widget client 7, 17 further provides all necessary functions for handling the widgets, for example receiving a list of available widgets, downloading widgets, deleting widgets and accessing the widget server 2 or the like.

The devices 6, 16 can be any type of user devices, such as a personal computer or a television, but in a preferred embodiment of the present invention the devices 6, 16 are a television.

The network 5 can be any type of network enabling a communication between the devices 6, 16 and the widget server 2. In a preferred embodiment the network 5 is the internet and the devices 6, 16 are televisions having internet access or corresponding internet applications.

The devices 6, 16 also comprise corresponding transmitting and/or receiving means 32, 33 for transmitting and/or receiving messages, data or information through the network 5.

The devices 6, 16 also comprise input means 9, 19 enabling a user to input requests, instructions or information. Input means can be buttons, infrared interfaces for receiving instructions from a remote controller, a keypad, a touchpad, a mouse or the like or any combination thereof. The devices 6, 16 also comprise a respective display 8, 18 for displaying information to a user.

The widget server 2 also comprises a transmitting means 30 and a receiving means 31 for transmitting and receiving information or data through the network 5. The transmitting and receiving function can also be implemented in one single means within the widget server 2.

Further, the widget server comprises a control means 3 for controlling all processors accomplished by and within the widget server 2. Additionally, a storage means 4 is provided within the widget server 2 for storing data, programs or information.

The present invention now provides a specific possibility of providing a widget recommendation. According to the present invention the widget recommendation is handled completely within the widget application or widget platform. With the present invention no external sources or applications, such as e-mail or instant messaging, are necessary. Only between the installed widget client 7, 17 within the devices 6, 16 and the widget server 2 a direct handling of the recommendations is enabled, the consumption of resources is thus reduced and the handling is simplified.

Further, according to the present invention a specific operation of the widget server 2 is provided. If a user via the widget client 7, 17 installed in his device 6, 16 accesses the widget server 2, he will automatically receive a list of widgets. The present invention now bases on the idea that the list of widgets which is transmitted from the widget server 2 to the corresponding device 6, 16, will be adapted in accordance with the recommendations. That means that a user accessing the widget server 2 will in any case receive a list of widgets, but with the present invention it is proposed to change the list of widgets, for example to sort the list differently, dependent on recommendations.

This again makes the handling for the user receiving the recommendation more simple. The user receiving the recommendation just has to access the widget server and then he will automatically receive an adapted list of widgets. He does not have to additionally check external applications, such as e-mail or messaging. The user will thereby receive a personalized widget list in accordance with recommendations without having to use any external applications. He can therefore stay passive and just has to access the widget platform on the widget server 2 through his widget client 7, 17.

In the following the different operations and devices will be explained in more detail.

First, the method and device for providing a widget recommendation will be explained in more detail. As an example, in the following description it is assumed that the first device 6 is the device providing the widget recommendation and the second device 16 is the device receiving the widget recommendation. Correspondingly, the user of the first device 6 will be referred to as recommending user and the user of the second device 16 will be referred to as receiving user or accessing user (since he has to access the widget server 2 for receiving the widget list).

The operations and features for providing a widget recommendation will therefore be described in the following with relation to the first device 6 only as an example, but the present invention is not limited to a number of two devices connected to the widget server 2 and is not limited to the described exemplary example, where the first device 6 is the recommending device and the second device 16 is the receiving device.

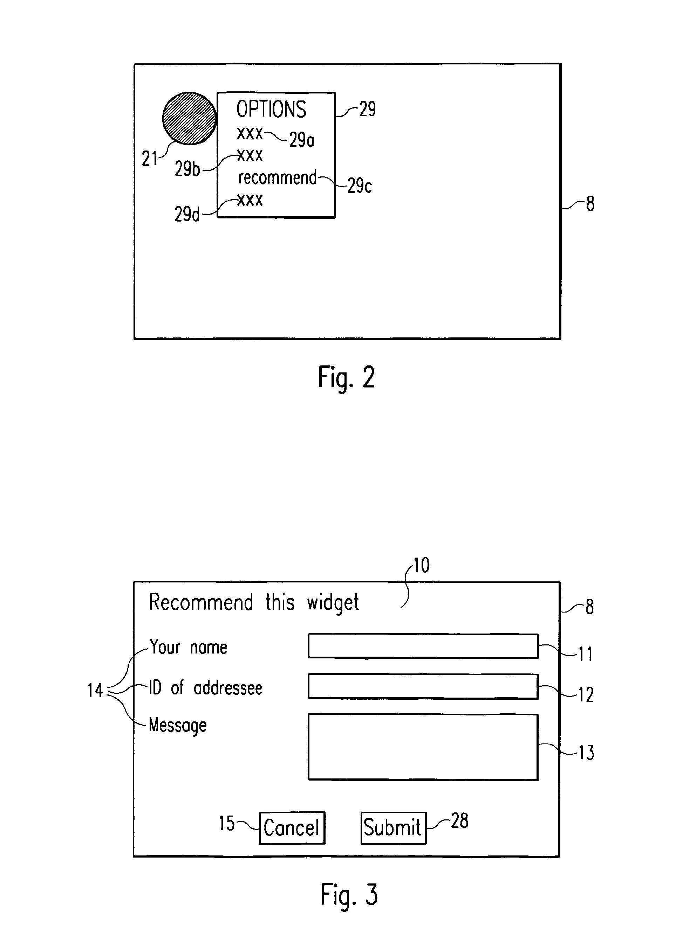

Fig. 2 shows a display 8 of the first device 6. On the display a widget 21 is shown and by a corresponding selection operation the user of the first device 6 can select the widget 21 and further instruct the device 6 to display an option menu 29. In the present example several options 29a, 29b, 29c,29d are displayed, wherein within the option menu 29 the option "recommend" 9c is also displayed. If the user then selects the recommendation option 9c, a recommendation display 10 will appear as shown in fig. 3.

Fig. 3 shows an example of a recommendation window 10. In the recommendation window several fields 11, 12, 13 which have a corresponding description 14 and which allow the recommending user to input information regarding the recommendation of the widget.

After having selected the widget 21 which is to be recommended to a receiving user, the recommending user of the first device 6 further has to input at least an identification number of the receiving user to which the widget 21 is to be recommended.

Generally, the identification number of a user according to the present invention can be any type of number which is uniquely associated to one user. The identification number can therefore either be a number identifying the device 6,16 of the user or identifying the person of the user or a combination thereof. The identification number can for example be an IP address, a MAC address, a serial number, a nickname of a user or a combination thereof.

The user who wants to recommend the widget 21 at least has to select the corresponding widget 21 and then in the recommendation window 10 has to insert the identification number (ID) of the addressee into an identification number field 12. Optionally, the user can also insert his name or nickname into a name field 11. Optionally, also a message field 13 can be provided, enabling the user to input a message intended for the user to who the widget 21 is to be recommended.

In the embodiment as shown in fig. 3, the recommending user then can either operate a corresponding cancel button 15 in order to cancel all the information input in the recommendation window 10 or he can operate a corresponding submit button 28 in order to transmit the information to the widget server 2. In this second case then the device 6 via the transmitting means 32 will transmit the information of the selected widget 21 and the identification number of the addressee or user to who the selected widget 21 is to be recommended to the widget server 2.

With the present invention it is thus possible to enable a selection of a widget 21 and to further enable input of an identification number identifying a user, to which the selected widget is to be recommended. The information of the selected widget and the identification number is then transmitted to the widget server.

In the following, the widget server 2 and the operation of the widget server 2 will be explained in more detail. The widget server 2 will receive information of a selected widget 21 together with an identification number identifying a user, intended as addressee for the recommendation. The widget server 2 will then store the information of the selected widget 21 together with the identification number of the receiving user in the storage means 4.

If now the receiving or accessing user via the second device 16 accesses the widget server 2, then the control means 3 will check whether the identification number of the user accessing the widget server 2 corresponds to the identification number stored in the storage means 4 or not.

Generally, if a user accesses the widget server 2 via the widget client 7, 17, he will in any case automatically receive a list of possible widgets, where he can select and download one or more widgets. With the present invention, if the control means 3 determines that the identification number of the user accessing the widget server 2 corresponds to the stored identification number, then the widget server 2 will also transmit the list of widgets to the second device 16, but the list of widgets will be adapted in accordance with the stored recommendations.

A list of widgets within the present invention is intended to refer to the display of available widgets for a given user in a given region and in a given language, displayed on a widget main menu when he accesses the widget server 2.

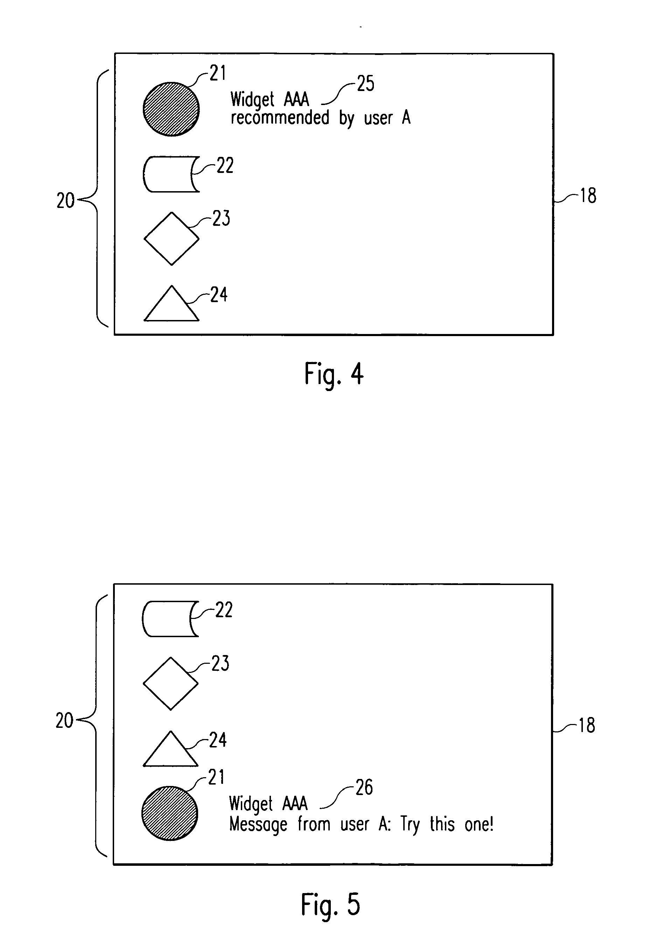

Different embodiments of adapting or personalizing the list of widgets in accordance with the recommendations will be explained with reference to fig. 4 and 5.

Fig. 4 and 5 both show a display 18 of the second device 16, which in the present example receives the recommendation. As previously explained, the second device 16 will receive a list 20 of widgets and the list will be displayed on the display 18. In fig. 4 a possible list 20 comprising several widgets 21, 22, 23, 24 is shown. In one embodiment the list 20 of widgets is adapted by changing the order of the widgets. In the preferred embodiment the recommended widget 21 is put in the first position of the list 20. Alternatively, the recommended widget 21 can be placed into another place of the display thereby distinguishing the recommended widget 21 from the other widgets 22, 23, 24.

Optionally, an additional message 25 can be displayed together with the recommended widget 21 indicating that the widget was recommended by a user, which in the present example is named user "A".

Alternatively, the recommended widget 21 can be highlighted, shown in a different color, shown with different size, shown as blinking widget or a combination thereof. In any case the recommended widget 21 will be distinguishable from the other widgets and will be recognizable as recommended widget.

In case that more than one user has transmitted a recommendation for a widget, then the list can be adapted depending on the number of recommendations for one widget. For example, the widget having most recommendations can be highlighted more than the others or can be put in first position. Generally, the list of widgets can be adapted depending on the number of recommendations per widget.

Fig. 5 shows a second embodiment of adapting the list of widgets. In this case the list 20 is displayed in a usual manner and the recommended widget 21 can be identified by an added message 26 from the recommending user. In this embodiment the message was input as previously explained with reference to fig. 3 into the corresponding message field by the recommending user.

In an alternative embodiment the two embodiments can be combined, i. e. the position of the widgets can be changed and additionally a message from the user recommending the widget can be provided. Also any other combination of the above described possibilities of amending the widget list 20 can be used.

As previously described, for providing a recommendation to a receiving user, the recommending user only has to know the identification number of the receiving user and to input it together with the selected widget.

However, there might be cases where this will result in security problems or this might also result in spamming problems. In a further embodiment the present invention therefore proposes to allow the creation of groups of users so that only within these groups of users recommendations can be done. It is hereby possible that only one user creates a group of other users from which he accepts recommendations or that a bilateral confirmation between the users of a user group is necessary for accepting a recommendation.

It is for example possible that a first user and a second user will exchange their respective identification numbers and both will have to do a cross-acceptance to validate their user group. These relationships between identification numbers will be stored in the storage means 4 of the widget server 2. Only in case that the identification number of a recommending user and the identification number of a user accessing the widget server 2 are comprised within the user group accepted by the accessing user, then the list of widgets will be adapted in accordance with the stored recommendations. The user interface of the devices 6, 16 should easily allow the user to find his IP or other identification number so as to share it with his friends. This way, when a request is received from a first recommending user to recommend a widget to a second user, the widget server 2 can check whether there is a pre-established friendship relationship between the first and second user. If such a friendship relationship does not exist, the recommendation request can be ignored. If it exists, the widget server 2 will proceed with the customization of the widget list to be delivered to the second user the next time this second user accesses the widget server 2.

It is also possible to limit the number of recommendations per widget and/or per receiving user and/or per recommending user.

In the following, a more detailed overview over the recommendation process will be given.

The receiving user selects to access the widget application platform on the widget server from the main menu of his device 16 by selecting a specific icon or menu category, or by pressing a dedicated key in the remote controller. The second device 16 or TV sends a request for the widget list (typically an XML file containing a widget logo and a brief description) to the widget server 2. This request contains the identification number of the TV user, such as IP address, MAC address, serial number and also comprises additional TV user information such as language and location.

The first parameters, i.e. the identification information, will be used to identify the user towards his "friends". The others are used for customizing/tailoring the service for his setting. The widget server 2 analyses this request. Before retrieving the widget_list.xml, it checks whether the user has received recommendations from other users, possibly members of the "friend-group", which have been previously accepted by the receiving user as friends. According to the number of recommendations received from different friends for each group, the widget_list.xml file is updated. For example, in these ways: The widget order within the list depends on the number of votes. The most recommended widget will appear in the first place. Not recommended widgets will be in the last positions. Also, a message or specific icon might be displayed at the side of the recommended widget, with messages written by the friend who recommended it, platform predefined messages, or platform predefined icons.

The receiving user with his device 16 receives the customized widget list 20, which is displayed on his screen 18, with widget order and /or recommendation messages being automatically displayed. This means, the user is passive in the recommendation process, only receiving the customized service.

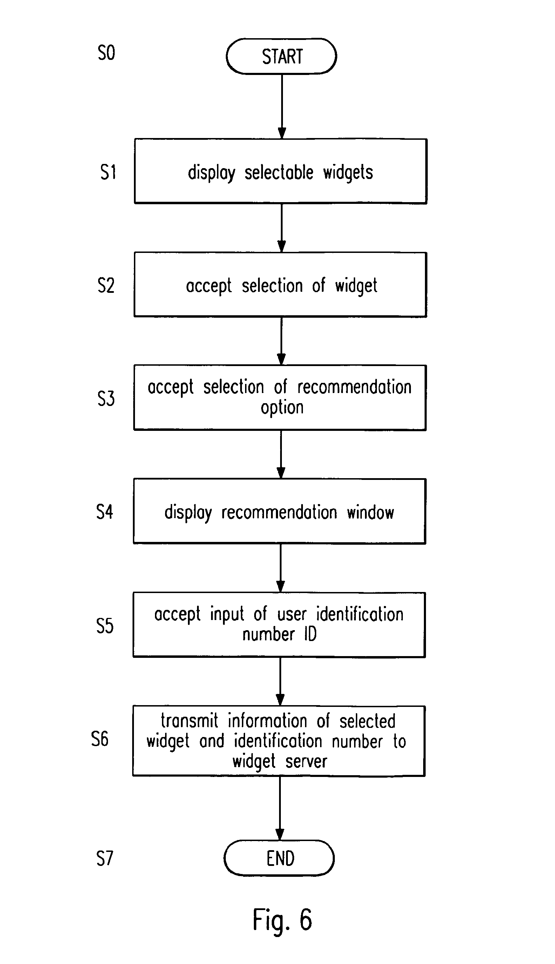

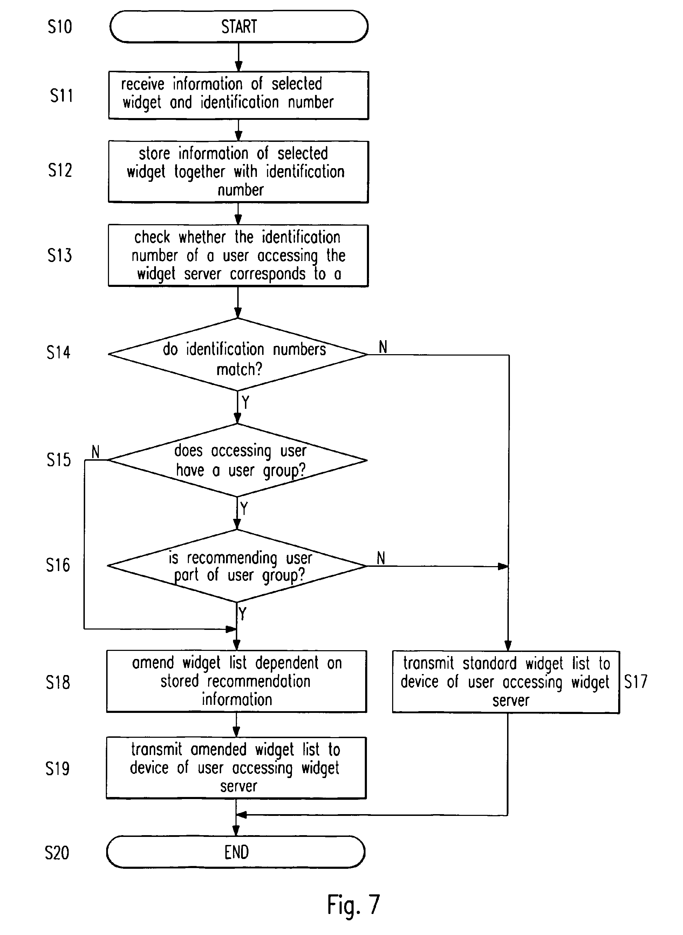

The methods according to the present invention will now be explained in relation to the flow charts as shown in fig. 6 and 7.

Fig. 6 shows a flow chart of the method for providing a widget recommendation. The process starts in step 50 for example with activating the widget client 7 of the first device 6. In the next step S1 the widgets installed in the first device 6 will be displayed. In the following step S2 a selection of a widget is accepted. In the following step S3 the selection of the recommendation option 29c is accepted and in the following step S4 the recommendation window 10 is displayed on the display 8.

In the following step S5 the user is enabled to input at least the identification number of the user to which the selected widget is to be recommended. Optionally, as previously described, the recommending user might also be enabled to input his name and/or a personal message for the receiving user.

In the following step S6 the information of the selected widget together with the identification number are transmitted to the widget server 2. The process of recommendation ends in step S7.

In fig. 7 now the process of operating a widget server 2 will be explained. The process starts in step S10. In the next step S11 the widget server 2 receives the information of the recommended widget together with the identification number. In the following step S12 this information is stored.

In the next steps S13 and S14, if a user accesses the widget server, then the control means 3 will check whether the identification number of the user accessing the widget server corresponds to one identification number stored in the storage means 4.

If the identification number does not correspond to the stored identification number, then in step S17 the normal, i.e. standard and un-amended widget list will be transmitted to the device of the user accessing the widget server.

Otherwise, if the identification number of the accessing user corresponds to a stored identification number, then in the following step S15 the widget server 2 will check whether the accessing user has defined a user group, which restricts the recommendations the accessing user will accept to recommendations from the users within the group.

If there is a group, then in the following S16 the control means will check, whether the recommending user is contained within the user group. If this is not the case, the process again continues with step S17.

Otherwise, if in step S15 no user group is detected or if in step S16 the recommending user is a part of the user group, then in the following step S18 the list of widgets will be adapted in accordance with the recommendation and transmitted in the following step S19 to the second device 16 of the receiving user. In an alternative embodiment, even if there is no user group defined, the recommendation of the recommending user will not be processed. This can for example depend on pre-established settings or on settings defined by the receiving user.

As previously described, the possibility of creating user groups is optional. The steps S15 and S16 can therefore also be omitted.

The process ends in step S19.

With the present invention thus a recommendation possibility is provided which is not based on a user profile. This results in that there is no need for a back channel to record the user behavior and there are no user privacy issues involved.

The present invention preferably is based on HTTP/S protocol, so that no e-mail or instant messaging, i. e. no external application, is necessary. The present invention thus provides a recommendation system approach based on handling the user-to-user recommendations exclusively within the widget platform itself. The user identification is accomplished by either a MAC address, IP address or serial number and thus is simplified. With the option of providing groups of friends, which require that one or both parties must add the other as friend, it is possible to prevent spamming and to restrict the recommendations only to persons from who the user wants to receive recommendations.

## Claims

1. Method of operating a widget server (2),
comprising the steps of
receiving information of a widget (21) selected for recommendation together with an identification number identifying a user, to which the selected widget (21) is to be recommended,
storing the information of the selected widget (21) together with the identification number,
checking the identification number of each user accessing the widget server (2), and transmitting a list (20) of widgets (21, 22, 23, 24) to the user device (16) of said user accessing the widget server (2) if the stored identification number corresponds to the identification number of the user accessing the widget server (2),
wherein the transmitted list (20) of widgets (21, 22, 23, 24) is adapted in accordance with the stored recommendations.

2. Method according to claim 1,
wherein the identification number is an IP address, a MAC address, a serial number, a nickname of a user or a combination of thereof.

3. Method according to claim 1 or 2,
wherein the list (20) of widgets (21, 22, 23, 24) is adapted by changing the order of the widgets (21, 22, 23, 24), preferably by putting the recommended widget (21) in first position of the list.

4. Method according to any of the preceding claims,
further comprising the step of receiving a message together with the recommendation and the identification number.

5. Method according to claim 4,
wherein the list (20) of widgets (21, 22, 23, 24) is adapted by adding the received message (26) to the recommended widget (21).

6. Method according to any of the preceding claims,
further comprising the steps of
storing a group of accepted identification numbers defined by the user to which the widget is to be recommended and adapting the widget list (20) only in case the identification number of the recommending user is one of the accepted identification numbers.

7. Widget server (2), comprising
receiving means (30) for receiving information of a widget (21) selected for recommendation together with an identification number identifying a user, to which the selected widget (21) is to be recommended,
storing means (4) for storing the information of the selected widget (21) together with the identification number,
control means (3) for checking the identification number of each user accessing the widget server (2), and
transmitting means (31) for transmitting a list (20) of widgets (21, 22, 23, 24) to the user device (16) of said user accessing the widget server (2) if the stored identification number corresponds to the identification number of the user accessing the widget server (2),
wherein the transmitted list (20) of widgets (21, 22, 23, 24) is adapted in accordance with the stored recommendations.

8. Widget server (2) according to claim 7,
wherein the identification number is an IP address, a MAC address, a serial number, a nickname of a user or a combination of thereof.

9. Widget server (2) according to claim 7 or 8,
wherein the list(20) of widgets (21, 22, 23, 24) is adapted by changing the order of the widgets (21, 22, 23, 24), preferably by putting the recommended widget (21) in first position of the list (20).

10. Widget server (2) according to any of the preceding claims,
wherein the reception means (30) is further adapted to receive a message (26) together with the recommendation and the identification number.

11. Widget server (2) according to claim 10,
wherein the list (20) of widgets(21, 22, 23, 24) is adapted by adding the received message (26) to the recommended widget (21).

12. Widget server (2) according to any of the preceding claims,
wherein the storing means (4) is further adapted to store accepted identification numbers of the user to which the widget is to be recommended and
wherein the widget list (20) is only adapted in case that the identification number of the recommending user is one of the accepted identification numbers.

13. Method for providing a widget recommendation,
comprising the steps of
enabling selection of a widget (21),
enabling input of an identification number identifying a user, to which the selected widget (21) is to be recommended, and
transmitting the information of the selected widget (21) and the identification number to a widget server (2).

14. Device (6) for providing a widget recommendation, comprising input means (9) enabling selection of a widget (21) and enabling input of an identification number identifying a user, to which the selected widget is to be recommended, and
transmitting means (32) for transmitting the information of the selected widget (21) and the identification number to a widget server (2).

15. System (1) comprising a device (6) according to claim 14 and a widget server (2) according to any of claims 7 to 13.
